# EUROPÄISCHE PATENTSCHRIFT

(11) **EP 2 609 984 B1**
(45) Veröffentlichungstag und Bekanntmachung des Hinweises auf die Patenterteilung: **26.02.2020**
(21) Anmeldenummer: 12198036.1
(22) Anmeldetag: 19.12.2012
(51) Int. Cl.: B01D 53/28, B65D 81/26

(54) **FEUCHTIGKEITSREGULIERENDES ELEMENT ZUR VERWENDUNG IN VERPACKUNGEN**
HUMIDITY REGULATOR ELEMENT FOR USE IN PACKAGING
ÉLÉMENT DE RÉGULATION D'HUMIDITÉ DESTINÉ À ÊTRE UTILISÉ DANS DES EMBALLAGES

(30) Priorität: 02.01.2012 DE 202012100002 U
(43) Veröffentlichungstag der Anmeldung: 03.07.2013
(73) Patentinhaber: McAirlaid's Vliesstoffe GmbH, 37339 Berlingerode (DE)
(72) Erfinder: Schmidt, Andreas, 37115 Duderstadt (DE); Tintchev, Filip, 37115 Duderstadt (DE)
(74) Vertreter: Bungartz Christophersen Partnerschaft mbB Patentanwälte

(56) Entgegenhaltungen:
- CH-A5- 667 514
- DE-U1-202009 005 971
- US-A- 5 143 773
- US-A1- 2005 205 840

## Beschreibung

Die vorliegende Erfindung betrifft ein feuchtigkeitsregulierendes Element zur Verwendung in Verpackungen, welches eine Lage aus Zellstofffasern und optional weitere Schichten umfasst.

Lebensmittel unter optimalen Bedingungen zu lagern, bedeutet, dass Parameter wie die Umgebungstemperatur und die relative Luftfeuchtigkeit entsprechend kontrolliert oder beeinflusst werden. Die Erhöhung der relativen Luftfeuchtigkeit in einen Bereich, der sich negativ auf die Qualität des Lebensmittels auswirken kann, wird durch viele Parameter verursacht, wie durch Temperaturschwankungen, Schwitzen der Produkte (auch als Atmung bezeichnet), Feuchtigkeit, die vom Produkt selbst abgegeben wird, (bio)chemische Reaktionen innerhalb des Produktes. Um Bedingungen, unter denen die Produkte gelagert werden, zu optimieren, werden die Lebensmittel ihrer Art und Konsistenz entsprechend verpackt. Dabei ist vor allen Dingen zu berücksichtigen, dass, wenn größere Mengen Feuchtigkeit auftreten, d. h. die relative Luftfeuchtigkeit Werte von 80 % überschreiten, das Wachstum der Mikroorganismen, wie Schimmelpilze, stark begünstigt wird.

Viele Lebensmittel werden verpackt, um diese vor äußeren Einflüssen, insbesondere auch vor Luftsauerstoff und vor dem Austrocknen zu schützen und eine bessere Qualität, sowie längere Haltbarkeit zu gewährleisten. Das sich bildende Kondenswasser ist üblicherweise in der Verpackung gut sichtbar und wirkt sich negativ auf den optischen Eindruck des Produktes aus. Auch stellt eine hohe relative Luftfeuchtigkeit eine gute Umgebung für das Wachsen von Mikroorganismen dar.

Optimale Bedingungen von Temperatur und Luftfeuchtigkeit sind aber nicht nur für Lebensmittel, die in Haushaltsmengen verpackt und für den privaten Verzehr gedacht sind, von großer Bedeutung, sondern auch bei der Lagerung der Produkte beim Hersteller, während des Transports und im Handel. Es gibt aber auch eine Vielzahl von anderen Produkten, die konstante Gehalte an Luftfeuchtigkeit benötigen, wie viele elektronische Geräte, Bekleidung etc.

Aus der DE 40 00 143 ist eine Verpackung oder Behälter für Lebens- und Genussmittel, z. B. für Tabakwaren, bekannt, das ein Vlies zur Feuchtigkeitsregulierung enthält. Dieses Vlies soll als Speichervlies ein hohes Wasseraufnahmevermögen aufweisen, es ist von einer weitgehend Wasserdampfundurchlässigen Materialschicht umschlossen und mit der Verpackungsatmosphäre über ein zweites Vlies in Verbindung steht, das die Feuchtigkeitsverluste aus der Verpackungsatmosphäre ausgleichen soll und eine vorgegebene Gleichgewichtsfeuchtigkeit aufweist.

Aus der DE 20 2009 005 971 ist eine mehrlagig aufgebaute Saugmatte als Einlage für Lebensmittelverpackungen bekannt, die eine flüssigkeitsundurchlässige Basisschicht, eine Schicht aus einem absorbierenden Material und eine für Flüssigkeiten durchlässige Deckschicht aufweist, wobei die Basisschicht und die für Flüssigkeiten durchlässige Deckschicht an mindestens zwei Seiten die Schicht aus dem absorbierenden Material überragt. Die Schicht aus einem absorbierenden Material ist im Wesentlichen aus Zellstofffasern aufgebaut, welche darüber hinaus superabsorbierende Materialien enthalten können.

Aus der CH 667 514 A5 ist eine Vorrichtung zum Erzeugen einer konstanten relativen Feuchte in einem Raum bekannt, in welchem eine gesättigte Lösung eines wasserlöslichen Stoffes in Wasser in einem nicht wasserlöslichem, kapillarporösen Körper eingearbeitet ist, so dass der Wasserdampfdruck der gesättigten Lösung für die relative Feuchte in diesem Raum bestimmend ist. Als wasserlösliche Stoffe werden Salze/Salzhydrate oder Zucker verwendet.

In der US 5,143,773 wird ein hygroskopisches Laminat offenbart, welches eine hygroskopische Schicht, eine poröse Lage, die keine Rückhalteeigenschaften für Wasser hat, und eine für Wasser undurchlässige Lage aufweist. Die für Wasser durchgängige Lage ist über der hygroskopischen Lage angeordnet und die für Wasser undurchlässige Lage auf der anderen Seite, so dass die hygroskopische Schicht dazwischen liegt. Die hygroskopische Schicht umfasst einen für Gas durchlässigen Film, ein wasserabsorbierendes Polymer und mindestens ein Feuchthaltemittel (humectant). Das wasserabsorbierende Polymer und das Feuchthaltemittel sind in dem für Gas durchlässigen Film enthalten, d. h. in diesen Film "verpackt" (wrapped). Als Trägermaterialien für den Gas-durchlässigen Film genannt werden Papier, Non-Woven, Filz aus Zellulosefasern oder ein Gemisch daraus auch mit anderen Fasern oder aus den Fasern in Form eines groben Netzes (coarse net) gebildete Strukturen. Als Feuchthaltemittel werden Essigsäure, Propionsäure, Glykolsäure, Milchsäure, Hydracrylsäure, Brenztraubensäure und Pyrrolidoncarboxylsäure sowie deren Natrium-, Kalium-, Calcium- und Magnesiumsalze eingesetzt.

Aus der US 2005/0205840 A1 ist ein System zum Aufnehmen von Sauerstoff bekannt, wobei die Sauerstoffaufnehmende Zusammensetzung eine wirksame Menge eines Laccase-Enzyms und eine wirksame Menge eines Reduktionsmittels sowie eine für Sauerstoff durchlässige funktionelle Sperrschicht. Darüber hinaus kann das System auch hygroskopische Mittel enthalten.

Bei der Lagerung von Lebensmitteln und auch anderen feuchtigkeitsempfindlichen Produkten ist es auf der einen Seite erwünscht, dass das Lebensmittel oder Produkt in einer Umgebung gelagert wird, die eine gewisse Feuchtigkeit aufweist, um ein Austrocknen zu verhindern. Auf der anderen Seite soll vermieden werden, dass die relative Luftfeuchtigkeit, die eine gute Grundlage für das Wachstum von Schimmel und Mikroorganismen bildet und die Qualität des Lebensmittels oder Produktes beeinträchtigt, zu hoch wird.

Der vorliegenden Erfindung lag die Aufgabe zugrunde, ein Material zur Verfügung zu stellen, das in Verpackungen für den Transport und sonstige Lagerung von feuchtigkeitsempfindlichen Produkten verwendet werden kann oder als solches dienen kann, um diese Produkte unter optimalen Feuchtigkeitsbedingungen zu lagern.

Dieses Material sollte derart gestaltet sein, dass es für eine Vielzahl von Produkten und unterschiedlichen Verpackungsformen geeignet ist und an diese angepasst werden kann. Gegenstand der vorliegenden Erfindung ist demgemäß ein feuchtigkeitregulierendes Element zur Verwendung in Verpackungen, welches eine Lage aus Zellstofffasern, eine Basislage, die oberhalb oder unterhalb der Lage aus Zellstofffasern angeordnet ist, und eine Deckschicht, die auf der der Basislage gegenüberliegenden Seite angeordnet ist, und optional weitere Schichten umfasst und Mittel enthält, die den Feuchtigkeitsgehalt regulieren können, wobei die Lage aus Zellstofffasern im Wesentlichen aus unregelmäßig angeordneten Zellstofffasern aufgebaut ist, die bereichsweise durch Verpressen unter Verdichtung der Zellstofffasern in den verpressten Bereichen miteinander verbunden sind, die Basislage und die Deckschicht gleich oder verschieden sind und ein Vlies oder Tissue sind und dass die Mittel, die den Feuchtigkeitsgehalt regulieren können und in der Lage aus Zellstofffasern in fester Form enthalten sind, ausgewählt sind aus anorganischen Salzen und Zuckern.

Das erfindungsgemäße feuchtigkeitsregulierende Element weist den Vorteil auf, dass es im Wesentlichen aus Materialien besteht, die gut erhältlich und preiswert sind. Die Zellstofffasern sind ein preiswert erhältliches Material, das in großen Mengen verfügbar ist und sich darüber hinaus gut verarbeiten lässt. Darüber hinaus ist es als Naturstoff nicht nur umweltverträglich, es ist auch verträglich mit den meisten Lebensmitteln und anderen vor Feuchtigkeit zu schützenden Produkten.

Das feuchtigkeitsregulierende Element enthält erfindungsgemäß Mittel, die den Feuchtigkeitsgehalt der Luft regulieren können, die ausgewählt sind aus anorganischen Salzen und Zuckern. Bei diesen Mitteln handelt es sich um Substanzen (Stoffe oder Stoffgemische), die bei Kontakt mit Luft dazu in der Lage sind, die Feuchtigkeit aus der Luft an sich zu ziehen oder abzugeben. Die Feuchtigkeit kann dabei angelagert werden (Hydratation) oder abgegeben werden (Entwässern). Bei Anlagerung von Feuchtigkeit beispielsweise an ein Salz durch den Kontakt von Feuchtigkeit mit dem Salz bildet sich eine gesättigte Lösung, das eingesetzte Mittel zerfließt langsam, verbleibt aber zwischen den Zellstofffasern. Auf der anderen Seite kann das verwendete Mittel das gebundene Wasser auch wieder abgeben, wenn der Feuchtigkeitsgehalt (in Bezug auf die Fähigkeit des verwendeten Mittels, Wasser zu binden) zu niedrig wird, in diesem Fall wird Feuchtigkeit an die Luft abgegeben, d. h. das Mittel wird entwässert. Zwischen dem Mittel und der Umgebung stellt sich ein Gleichgewicht ein.

I Mithilfe derartiger Stoffe lässt sich die Umgebung, je nach Auswahl dieser Stoffe auf eine relative Luftfeuchtigkeit der Umgebung bis zu nahe 0 % reduzieren. Diese Mittel können je nach Anwendungszweck und Absorptionskapazität in Bezug auf Wasser und Feuchtigkeit ausgewählt werden. Zu den geeigneten anorganischen Salzen zählen beispielsweise Natriumchlorid, Kaliumchlorid, Zinkchlorid, Natriumcarbonat, Kaliumcarbonat, Natriumsulfat, Kaliumsulfat, Natriumnitrat, Kaliumnitrat, Natriumhydroxid, Kaliumhydroxid, Calciumchlorid, Calciumoxid und beliebige Gemische der Voranstehenden. Zu den Zuckern zählen beispielsweise Fructose, Glucose und Saccharose. Es ist auch möglich, Gemische von verschiedenen Stoffen einzusetzen. Die Auswahl dieser Substanzen erfolgt in Abhängigkeit von der einzustellenden Luftfeuchtigkeit und dem zu lagernden Produkt.

Die feuchtigkeitsregulierenden Mittel werden in fester Form, vorzugsweise teilchenförmig, eingesetzt. Sie können auf die Lage auf Zellstofffasern aufgestreut werden. In einer bevorzugten Ausführungsform ist das feuchtigkeitsregulierende Mittel in Form von Teilchen in die Lage aus Zellstoff eingearbeitet. In dieser Lage liegt das Mittel lagenweise oder statistisch verteilt vor. Es kann beispielsweise direkt bei der Herstellung der Zellstofflage mit eingearbeitet werden.

Das erfindungsgemäße feuchtigkeitsregulierende Element ist vorzugsweise ein flächiger Körper. Dieser kann auf die gewünschte Größe zugeschnitten werden und in eine Verpackung eingelegt werden oder Teil dieser Verpackung sein. Die Lage aus Zellstofffasern hat den Vorteil, dass diese zum einen quasi als Trägermaterial für das die Feuchtigkeit adsorbierende Mittel wirken kann, zum anderen zeigt eine Lage aus Zellulose ebenfalls Adsorptionseigenschaften, d. h. sobald die Adsorptionskapazität der feuchtigkeitsbindenden Mittel erschöpft ist, d. h. wenn das feuchtigkeitsbindende Mittel durch die Feuchtigkeit langsam zerfließt, kann diese gebildete Lösung von den Zellulosefasern aufgenommen werden, so dass das zu schützende und zu verpackende Produkt nicht mit der Feuchtigkeit in Kontakt kommt.

Die Lage aus Zellstofffasern liegt in Form von vliesartigem oder gewebeartigem Material vor. Die Zellstofffasern haben den Vorteil, dass es sich um preiswerte und im Handel verfügbare Materialien handelt, die einfach zu bearbeiten sind. Erfindungsgemäß ist die Absorptionslage aus Zellstofffasern ein Airlaid. Die Zellstofflage weist über ihre Fläche verteilte Prägebereiche auf, in denen die Fasern stärker als in den übrigen Bereichen miteinander verpresst und hierdurch klebstoff- und/oder bindemittelfrei verbunden sind. Vorzugsweise ist der Saugkern in dieser Ausführungsform aus einer Faserstoffbahn aus Zellstofffasern hergestellt, welche unter Erzeugung der Prägebereiche im Druckbereich bindemittelfrei, punkt- oder linienförmig kalandriert und verbunden sind. Die Herstellung derartiger Materialien ist beispielsweise im europäischen Patent 1 032 342 beschrieben. Die Faserschicht der Lage aus Zellstofffasern ist in dieser Ausgestaltung so strukturiert, dass die Zellstofffasern außerhalb dieser diskreten Prägebereiche gelockert übereinander oder nur schwach aneinander haftend vorliegen, wohingegen sie in den Prägebereichen miteinander verpresst sind und eine innige Verbindung mit den jeweils benachbarten Zellstofffasern eingehen. Durch diese Ausgestaltung ist ein völliger Verzicht auf Klebstoffe und Bindemittel zur Bildung des Verbundes aus Zellstofffasern möglich, was ein einfaches und vollständiges Recycling ermöglicht. In den Prägebereichen haften die Fasern nicht lediglich aneinander. Vielmehr wird durch die Druckbeaufschlagung erreicht, dass benachbarte Zellstofffasern in diesen Prägebereichen fest miteinander verbunden sind. Diese Verbindung vermag auch der Einwirkung von Feuchtigkeit zu widerstehen, so dass sich die erfindungsgemäß verwendete Absorptionslage durch mechanische Belastbarkeit auch in nassem Zustand auszeichnet. Die Bereiche außerhalb der diskreten Prägebereiche, in denen die Fasern gelockert übereinander oder nur schwach aneinander haftend vorliegen, zeichnen sich durch eine gute Absorptionsfähigkeit aus. In diesen Bereichen liegen vorzugsweise auch die Mittel zum Binden von Feuchtigkeit vor. Diese können innerhalb der einzelnen Zellstofffasern verteilt sein und in den Bereichen außerhalb der diskreten Prägebereiche stehen sie aufgrund des lockeren Verbundes der Zellstofffasern in gutem Kontakt mit der Umgebung, insbesondere mit der Feuchtigkeit. Liegen größere Mengen Feuchtigkeit bzw. Flüssigkeit vor, so werden diese von dem lockeren Verbund aus Zellstofffasern aufgenommen, über die gesamte Fläche der Absorptionslage verteilt und dort gehalten.

Oberhalb und/oder unterhalb der Lage aus Zellstofffasern ist eine weitere Lage aus Vlies, Tissue oder einem anderen dünnen Material angeordnet. Diese weiteren Lagen verhindern, dass das Produkt unmittelbar mit dem feuchtigkeitsregulierenden Mittel in Kontakt kommt.

Ein weiterer Gegenstand der vorliegenden Erfindung ist die Verwendung des voranstehend beschriebenen Elements als Einlage in Verpackungen oder als Teil von Verpackungen von festen oder flüssigen Lebensmitteln, Arzneimitteln, chemischen Substanzen, Gefahrgütern, elektronischen Produkten, Kulturgütern und Zierpflanzen.

Nachfolgend wird das erfindungsgemäße Element anhand eines Ausführungsbeispiels unter Bezugnahme auf die Zeichnung näher erläutert. Darin zeigen:
- Figur 1: einen stark vergrößerten Teilschnitt durch das Element,
- Figur 2: einen stark vergrößerten Teilschnitt durch ein mehrlagiges Element,
- Figur 3: einen stark vergrößerten Teilschnitt durch weiteres mehrlagiges Element,
- Figur 4: einen Teilschnitt durch eine Verpackung.

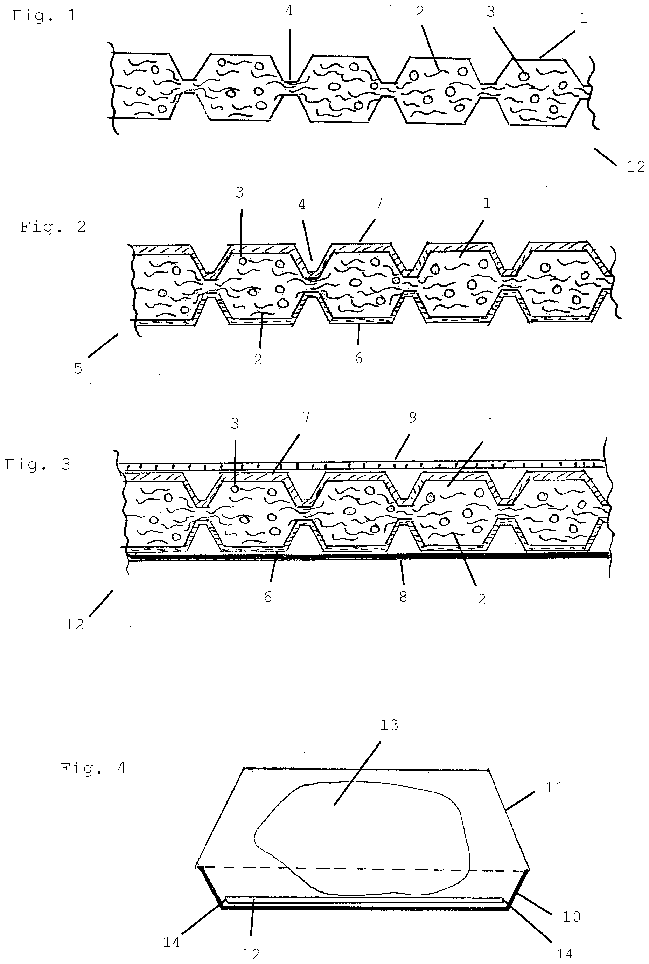

Figur 1 zeigt einen Teilschnitt durch das erfindungsgemäße feuchtigkeitsregulierende Element 12. Dieses Element weist eine Lage 1 auf, die einen hohen Anteil an Zellstofffasern 2 aufweist, in die feuchtigkeitsbindende Mittel 3 eingearbeitet sind. Die Lage 1 bildet den Kern des Elements 12.

Die Zellstofffasern 2 sind in den Prägebereichen 4 verdichtet und auf diese Weise miteinander verbunden. Die Prägebereiche 4 liegen sich in der hier dargestellten Ausführungsform auf der Ober- und Unterseite einander gegenüber, so dass im jeweiligen Prägebereich 4 nur noch ein schmaler Steg miteinander verbundener Zellstoffmasse verbleibt. Die übrigen, zwischen den jeweiligen Prägebereichen 4 angeordneten Bereiche der Schicht 1 weisen eine lockere Zellstoffschichtung auf. Eine innige Verbindung zwischen den Zellstofffasern 2 besteht in diesen Bereichen nicht.

Das Adsorptionsverhalten und das Rückhaltevermögen von Feuchtigkeit wird durch die Lage 1 aus den Zellstofffasern 2 sowie dem verwendeten Feuchtigkeit bindenden Mittel 3 sowie gegebenenfalls weiteren Stoffen, die in die Lage 1 eingearbeitet sein können, bestimmt. Die Lage 1 hat in der hier dargestellten Ausführungsform in den Prägebereichen 4 die Gestalt von Pyramidenstümpfen oder Kegelstümpfen, wobei der Winkel der gebildeten Schrägen vorzugsweise zwischen 10° und 45° liegen sollte.

Als Zellulosematerial für die Faserstoffbahn 1 lässt sich preiswert zur Verfügung stehendes Massenmaterial einsetzen. Vorzugsweise wird ein sogenannter Fluff-Pulp eingesetzt, der sich durch ein sehr gutes Bindungsverhalten auszeichnet, was die mechanische Festigkeit des Elements gegen vertikale Zugkräfte verbessert.

Bei der Herstellung des erfindungsgemäßen Elements wird zunächst ein Bahnenmaterial hergestellt, das anschließend auf die gewünschte Größe geschnitten wird. Bei der Herstellung des Bahnenmaterials in einem kontinuierlichen Verfahren wird die später die Lage 1 bildende Faserstoffbahn aus einer im Luftstrom aufgeschütteten Schüttung von Fasern 2 aus defiberisiertem Zellstoff (wood pulp) und die Feuchtigkeit bindende Mittel 3 und gegebenenfalls eingearbeiteten weiteren Stoffen hergestellt. Für die Herstellung einer standardisierten, defiberisierten Ware kann auf die am Markt verfügbaren, nachwachsenden Holzrohstoffe zurückgegriffen werden.

Das Verfahren der Zellstoffschüttung als Ausgangsprodukt für die Lage 1 ermöglicht eine trockene Verarbeitung der Zellstofffasern 2 und damit bei der anschließenden Prägung der mehrlagigen Bahn zwischen zwei Strukturwalzen eine sehr gute Verdichtung der Zellstofffasern in den diskreten Prägebereichen 4. Außerhalb dieser Prägebereiche 4 liegen die Fasern locker aneinander, was das Verhalten der eingearbeiteten, die Feuchtigkeit bindenden Mittel dahingehend beeinflusst, dass die Feuchtigkeit gemäß der Bindekapazität (Hygroskopizität) vorgegebenen Bindungsvermögen nicht beeinträchtigt, darüber hinaus wird durch die lockere Schichtung der Fasern zwischen den jeweiligen Prägebereichen die Flexibilität des Elementes 1 verbessert und wenn das Element 1 in Verpackungen eingesetzt wird, dient es gleichzeitig als Schutz vor Stößen etc. des zu verpackenden Produktes. Das erfindungsgemäße Element kann als Einlage in Lebensmittelverpackungen eingesetzt werden, beispielsweise von Convenience-Produkten, Brot, Wurstwaren einschließlich Frikadellen.

Die Herstellung des erfindungsgemäßen Elements erfolgt vorzugsweise aus Bahnenmaterial, welches in einem kontinuierlichen Prozess gefertigt wird. In luftunterstützter Schichtung werden zunächst die Zellstofffasern 2 und das die Feuchtigkeit zu binden vermögende Mittel 3 sowie gegebenenfalls weitere Zuschlagstoffe zur Bildung der Schicht 1 gelegt. Anschließend erfolgt in einem Kalander mit zwei strukturierten Kalanderwalzen die Herstellung der Prägebereiche 4. Ein mögliches Herstellungsverfahren wird z. B. im europäischen Patent 1 032 342 offenbart.

In Abhängigkeit davon, wie dick die fertige Bahn sein soll, ist es auch möglich, mehrere Schichten aus Zellstofffasern 2 und Mittel 3 sowie gegebenenfalls weiteren Zuschlagstoffen übereinander zu schichten und anschließend in den Kalander einzuführen, um die Prägebereiche 4 zu erhalten. Auf diese Weise wird das die Feuchtigkeit bindende Mittel lagenweise in die Bahn eingearbeitet. Eine homogene Verteilung wird erreicht, wenn die die Feuchtigkeit bindenden Mittel gemeinsam mit den Zellstofffasern, also in den Zellstofffasern gleichmäßig verteilt, zu Bahnenmaterial verarbeitet werden.

Eine mehrlagige Bahn 5, wie sie in Figur 2 dargestellt ist, kann beispielsweise hergestellt werden, indem eine Deckschicht 6 oder eine Basisschicht 7 zunächst als Trägerschicht verwendet werden. Auf diese Trägerschicht 6 bzw. 7 wird die Schüttung von Zellstofffasern 2 und dem die Feuchtigkeit bindende Mittel 3 im Luftstrom aufgetragen. Anschließend wird diese Anordnung aus Trägerschicht und Schüttung gemeinsam durch die Strukturwalzen des Kalanders hindurchgeführt. Alternativ kann zuvor, d. h. vor dem abschließenden Hindurchführen durch den Kalander, die andere der beiden Schichten 6, 7, welche also nicht bereits die Trägerschicht ist, auch auf die Zellstoffschicht 1 aufgelegt werden.

Die beiden Schichten 6 und 7 können auch noch nachträglich gegebenenfalls mit weiteren Lagen in an sich bekannter Weise aufgebracht werden. Werden die weiteren Lagen nachträglich aufgebracht, so können sie eine beliebige Oberflächenstruktur aufweisen, beispielsweise glatt sein.

Die in Figur 2 dargestellte Ausführungsform zeigt insgesamt 3 Schichten, nämlich eine aus den Lagen 6, 1 und 7 zusammengesetzte Bahn.

Die unterste Lage dient als Basismaterial und als obere Lage ist eine Schicht aufgebracht. Die Deckschicht 6 hat den Vorteil, dass das zu verpackende Produkt nicht unmittelbar mit den Zellstofffasern und dem die Flüssigkeit adsorbierenden bzw. die Feuchtigkeit regulierenden Mittel in Kontakt tritt.

Als Basismaterial und auch als Deckschicht 6 kommen insbesondere solche Materialien in Betracht, durch die Wasserdampf hindurchtreten können, die aber für das eingearbeitete, die Feuchtigkeit regulierende Mittel undurchlässig sind. Beispiele für geeignete Materialien sind vliesartige Materialien und Tissue auf Kunststoff- oder Zellulosebasis.

Die Seitenkanten des Elements können offen oder geschlossen sein.

In Fig. 3 ist ein erfindungsgemäßes Element dargestellt, dass den gleichen Aufbau hat, wie das Element aus Fig. 2, jedoch von weiteren Lagen 8 und 9 umgeben ist. Diese weiteren Lagen 8 und 9 können größer sein als die die Lage 1 und die gegebenenfalls daran angeordneten Schichten 6 und 7. Die Lagen 8 und 9 können gleich oder verschieden sein und dienen dazu, die Eigenschaften des Elements an die spezifischen Anforderungen der zu lagernden Produkte anzupassen. Diese weiteren Schichten können miteinander verbunden sein, ohne dass die Lage 1 und/oder die gegebenenfalls daran angeordneten Schichten 6 und 7 mit erfasst ist. Diese beiden Lagen bilden für das Element eine Umhüllung. Sie können aus textilem, vliesartigem oder folienartigem Material oder Tissue sein. Zumindest eine der Schichten 8 bzw. 9 einer solchen Umhüllung sollte für die Feuchtigkeit durchlässig sein. Vorzugsweise sind die Lagen 8 bzw. 9 ausgewählt aus Baumwolle, Vlies und/oder perforierter Folie. In einer möglichen Ausführungsform ist eine der weiteren Lagen (8, 9) für Feuchtigkeit undurchlässig. In einer solchen Ausgestaltung kann beispielsweise die dem Produkt zugewandte Lage 9 für Feuchtigkeit durchlässig und die der Verpackung zugewandte Lage 8 für Feuchtigkeit undurchlässig sein. In dieser Ausführungsform wird vermieden, dass für den Fall, dass das Bindevermögen des erfindungsgemäßen Elements 12 für Feuchtigkeit erschöpft ist und durch den Druck des Produkts 13 auf dem Element 12 Flüssigkeit quasi ausgedrückt wird und sich am Boden der Verpackung 10 sammelt, diese Flüssigkeit über diese untere Lage wieder in Richtung Produkt gelangt.

Fig. 4 zeigt eine Lebensmittelverpackung bestehend aus Unterschale 10 und Deckel 11, in die ein erfindungsgemäßes Element 12 eingelegt wurde. Das gelagerte Produkt 13 wird auf das Element 12 gelegt und die Verpackung mit dem Deckel 11 verschlossen..

Eine in Fig. 4 dargestellte Verpackung wurde verwendet, um den Einfluss des erfindungsgemäßen Elements auf die Haltbarkeit von gelagerten Lebensmitteln zu untersuchen. Dazu wurde in eine Verpackung das erfindungsgemäße Element eingelegt, zum Vergleich wurde ein Element mit einem identischen Aufbau, aber ohne Feuchtigkeit bindendes Mittel eingelegt. In diesen Verpackungen wurden unterschiedliche Lebensmittel über mehrere Tage gelagert, das optische Aussehen dieser Lebensmittel wurde verglichen.

### Beispiele

| **Gelagertes Lebensmittel** | **Lagerdauer (Tage)** | **Optisches Aussehen** | |
|---|---|---|---|
| | | **Gemäß Erfindung** | **Vergleich** |
| Brötchen | 12 | leicht geschrumpft | deutliche Zeichen von Schimmel |
| Brötchen | 17 | trocken | komplett von Schimmel befallen |
| Toastbrot | 12 | unverändert | geringe Schimmelflecken |
| Toastbrot | 6 | trocken und hart | vollflächig von Schimmel umgeben |
| Frischkäse | 15 | kein Kondenswasser | deutliche Mengen an Kondenswasser |
| Harzer Käse | 15 | kein Kondenswasser | deutliche Mengen an Kondenswasser |
| Sandwich | 2 | kein Kondenswasser, Brot nicht matschig | Brot sehr feucht und matschig |

Wie die obige Darstellung deutlich macht, konnte die Haltbarkeit von Lebensmitteln deutlich verbessert werden.

Die Verringerung von Feuchtigkeit und Kondenswasser führt nicht nur zu einer Verlängerung der Haltbarkeit, auch der sensorische Eindruck der Lebensmittel ist deutlich besser. Nicht nur das Aussehen der Produkte war auch nach einigen Tagen der Lagerung im Vergleich zu den herkömmlich gelagerten Lebensmitteln noch sehr gut, auch die haptischen Eigenschaften waren sehr viel besser, so war das Brot, das für die Sandwiches verwendet wurde, im Vergleich zu dem herkömmlich gelagerten Produkt nicht matschig.

Beim Frischkäse, Harzer Käse kann eine deutliche Verbesserung den optischen Eigenschaften beobachtet werden. Bei diesen Produkte wurde nur die sensorische Änderung studiert, wobei auch eine Verlängerung der Haltbarkeit beim Behalt optimaler optischen Eigenschaften möglich ist.

### Bezugszeichenliste

- 1: Lage
- 2: Zellstofffasern
- 3: feuchtigkeitsbindendes Mittel
- 4: Prägebereich
- 5: mehrlagige Bahn
- 6: Deckschicht
- 7: Basisschicht
- 8, 9: weitere Lage
- 10: Unterschale
- 11: Deckel
- 12: erfindungsgemäßes Element
- 13: gelagertes Produkt
- 14: Seitenkante

## Patentansprüche

1. Feuchtigkeitsregulierendes Element zur Verwendung in Verpackungen, welches eine Lage (1) aus Zellstofffasern (2), eine Basislage (6), die oberhalb oder unterhalb der Lage aus Zellstofffasern angeordnet ist, und eine Deckschicht (7), die auf der der Basislage gegenüberliegenden Seite angeordnet ist, und optional weitere Schichten umfasst, wobei die Lage (1) aus Zellstofffasern (2) im Wesentlichen aus unregelmäßig angeordneten Zellstofffasern aufgebaut ist, die bereichsweise durch Verpressen unter Verdichtung der Zellstofffasern in den verpressten Bereichen miteinander verbunden sind, die Basislage (6) und die Deckschicht (7) gleich oder verschieden sind und ein Vlies oder Tissue sind, **dadurch gekennzeichnet, dass**
die Lage aus Zellstofffasern Mittel (3) in fester Form enthält, die den Feuchtigkeitsgehalt regulieren können und ausgewählt sind aus anorganischen Salzen und Zuckern.

2. Element nach Anspruch 1, **dadurch gekennzeichnet, dass** die anorganischen Salze ausgewählt sind aus der Gruppe bestehend aus Natriumchlorid, Kaliumchlorid, Zinkchlorid, Natriumcarbonat, Kaliumcarbonat, Natriumsulfat, Kaliumsulfat, Natriumnitrat, Kaliumnitrat, Natriumhydroxid, Kaliumhydroxid, Calciumchlorid und/oder Calciumoxid.

3. Element nach Anspruch 1, **dadurch gekennzeichnet, dass** die Zucker ausgewählt sind aus hygroskopischen Zuckern wie Fructose, Glucose und Saccharose.

4. Element nach einem der Ansprüche 1 bis 3, **dadurch gekennzeichnet, dass** auf der Basislage (6) und/oder der Deckschicht (7) eine für Flüssigkeiten undurchlässige weitere Schicht (8, 9) angeordnet ist.

5. Element nach einem der Ansprüche 1 bis 4, **dadurch gekennzeichnet, dass** die Zellstofffasern in den verpressten Bereichen unter Hitzebeaufschlagung verpresst sind.

6. Element nach einem der Ansprüche 1 bis 4, **dadurch gekennzeichnet, dass** die weitere Schichten (8, 9) gleich oder verschieden sind und ausgewählt sind aus Baumwolle, Vlies und/oder perforierter Folie.

7. Element nach einem der Ansprüche 1 bis 6, **dadurch gekennzeichnet, dass** eine der weiteren Lagen (8, 9) für Feuchtigkeit undurchlässig ist.

8. Verwendung des Elements nach einem der Ansprüche 1 bis 7 als Einlage (12) in Verpackungen (10, 11) von festen oder flüssigen Lebensmitteln, Arzneimitteln, chemischen Substanzen, Gefahrgütern, elektronischen Produkten, Kulturgütern und Zierpflanzen.

## Claims

1. Moisture regulating element for use in packaging, which comprises a layer (1) of cellulose fibres (2), a base layer (6) arranged above or below the layer of cellulose fibres, and a cover layer (7), which is arranged on the side opposite the base layer, and optional further layers, wherein
the layer (1) of cellulose fibres (2) is substantially constructed of irregularly arranged cellulose fibres, which are connected with each other in some areas through pressing whilst compacting the cellulose fibres in the pressed areas,
the base layer (6) and the cover layer (7) are identical or different and are fleece or tissue, **characterised in that** the layer of cellulose fibres contains means (3) in a solid form,
which can regulate the moisture content and are selected from inorganic salts and sugars.

2. Element according to claim 1, **characterised in that** the inorganic salts, are selected from the group consisting of sodium chloride, potassium chloride, zinc chloride, sodium carbonate, potassium carbonate, sodium sulfate, potassium sulfate, sodium nitrate, potassium nitrate, sodium hydroxide, potassium hydroxide, calcium chloride and/or calcium oxide.

3. Element according to claim 1, **characterised in that** the sugars are selected from hygroscopic sugars such as fructose, glucose and sucrose.

4. Element according to one of the claims 1 to 3, **characterised in that** a further layer (8, 9) that is non-permeable for fluids is arranged on the base layer (6) and/or the cover layer (7).

5. Element according to one of the claims 1 to 4, **characterised in that** the cellulose fibres are pressed into the pressed areas whilst applying heat.

6. Element according to one of the claims 1 to 4, **characterised in that** the further layers (8, 9) are identical or different and are selected from cotton, fleece and/or perforated film.

7. Element according to one of the claims 1 to 6, **characterised in that** one of the further layers (8, 9) is permeable for fluid.

8. Use of the element according to one of the claims 1 to 7 as an insert (12) in packages (10, 11) of solid or liquid food, medication, chemical substances, hazardous goods, electronic products, cultural goods and ornamental plants.

## Revendications

1. Élément régulateur d'humidité pour une utilisation dans des emballages, qui comprend une couche (1) constituée de fibres de cellulose (2), une couche de base (6) qui est disposée au-dessus ou en dessous de la couche constituée de fibres de cellulose, et une couche de couverture (7) qui est disposée sur le côté opposé à la couche de base, et en option d'autres couches, la couche (1) constituée de fibres de cellulose (2) étant pour l'essentiel constituée de fibres de cellulose disposées irrégulièrement, qui sont reliées les unes aux autres par zones par compression par compactage des fibres de cellulose dans les zones comprimées, la couche de base (6) et la couche de couverture (7) étant identiques ou différentes et étant un non-tissé ou un papier mousseline, **caractérisé en ce que** la couche constituée de fibres de cellulose contient des moyens (3) sous forme solide, qui peuvent réguler la teneur en humidité et qui sont choisis parmi les sels inorganiques et les sucres.

2. Élément selon la revendication 1, **caractérisé en ce que** les sels inorganiques sont choisis dans le groupe consistant en le chlorure de sodium, le chlorure de potassium, le chlorure de zinc, le carbonate de sodium, le carbonate de potassium, le sulfate de sodium, le sulfate de potassium, le nitrate de sodium, le nitrate de potassium, l'hydroxyde de sodium, l'hydroxyde de potassium, le chlorure de calcium et/ou l'oxyde de calcium.

3. Élément selon la revendication 1, **caractérisé en ce que** les sucres sont choisis parmi les sucres hygroscopiques tels que le fructose, le glucose et le saccharose.

4. Élément selon l'une des revendications 1 à 3, **caractérisé en ce qu'**une autre couche (8, 9), imperméable aux liquides, est disposée sur la couche de base et/ou sur la couche de couverture (7).

5. Élément selon l'une des revendications 1 à 4, **caractérisé en ce que** les fibres de cellulose sont, dans les zones comprimées, comprimées sous l'action de la chaleur.

6. Élément selon l'une des revendications 1 à 4, **caractérisé en ce que** les autres couches (8, 9) sont identiques ou différentes et sont choisies parmi le coton, un non-tissé et/ou une feuille perforée.

7. Élément selon l'une des revendications 1 à 6, **caractérisé en ce que** l'une des autres couches (8, 9) est imperméable à l'humidité.

8. Utilisation de l'élément selon l'une des revendications 1 à 7 en tant qu'insert (12) dans des emballages (10, 11) d'aliments liquides ou solides, de médicaments, de substances chimiques, de matières dangereuses, de produits électroniques, de biens culturels et de plantes ornementales.
